Europäisches Patentamt

European Patent Office

Office européen des brevets

(19)

(11) **EP 1 640 752 A1**

(12) **EUROPEAN PATENT APPLICATION**

(43) Date of publication:
    **29.03.2006 Bulletin 2006/13**

(51) Int Cl.:
    **G02B 5/18** (2006.01)    **G11B 7/135** (2006.01)

(21) Application number: **05020880.0**

(22) Date of filing: **26.09.2005**

(84) Designated Contracting States:
    **AT BE BG CH CY CZ DE DK EE ES FI FR GB GR
    HU IE IS IT LI LT LU LV MC NL PL PT RO SE SI
    SK TR**
    Designated Extension States:
    **AL BA HR MK YU**

(30) Priority: **24.09.2004 US 948556**

(71) Applicant: **MATSUSHITA ELECTRIC INDUSTRIAL
    CO., LTD.
    Kadoma-shi,
    Osaka-fu 571-8501 (JP)**

(72) Inventor: **Mizuyama, Yosuke
    Cambridge,
    Massachussetts 02138 (US)**

(74) Representative: **Eisenführ, Speiser & Partner
    Patentanwälte Rechtsanwälte
    Postfach 10 60 78
    28060 Bremen (DE)**

(54) **Multi-level and gray-level diffraction gratings**

(57)    Multi-level and gray-level diffraction gratings are provided for use in beam splitters and optical pickups. The multi-level and gray-level diffraction gratings are designed for utilization with diffracted light having higher orders than $\pm$ 1st order of diffracted light. By utilizing such higher orders of diffracted light, the multi-level and gray-level diffraction gratings can be designed to have a plurality of grooves with particular periods and grating depths which can be increased effectively so as to meet minimum manufacturing thresholds and provide high diffraction efficiencies without changing predetermined conditions of the gratings such as a diffraction angle or incident light angle.

**Figure 11**

1st order grating configuration

Original beam order

Higher order grating configuration

New beam order

Photo-detector 12

EP 1 640 752 A1

**Description**

BACKGROUND OF THE INVENTION

Optical pickup devices, used for recording/reproducing data to/from an optical recording medium, include a beam splitter for splitting a beam of light reflected by the optical recording medium. The split beams are detected by a photo-detector and the detected light beams are converted into digital signals used for tracking, focus, and spherical aberration control. In order to aim the split beams on appropriate portions of the photo-detector, the beam splitter is provided with a diffraction grating which is able to diffract the split beams with predetermined angles. The diffraction grating generally creates several orders of diffracted light beams such as $0^{th}$, $\pm 1^{st}$, $\pm 2^{nd}$ $\pm 3^{rd}$, and higher orders of light.

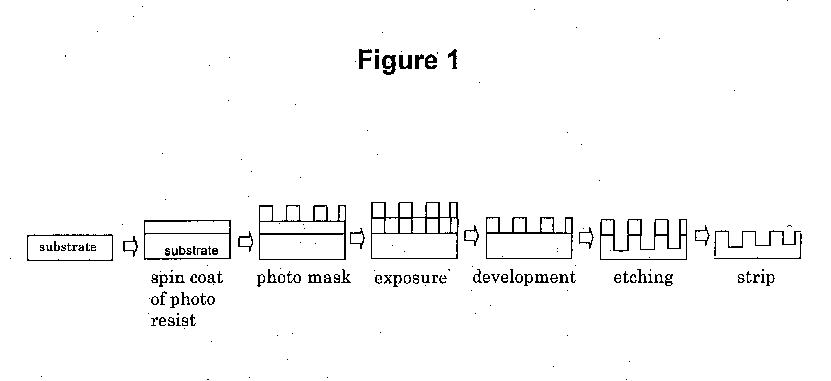

The diffraction gratings can be of a refractive or reflective type. Conventional diffraction gratings used in beam splitters are of a binary type produced by a photolithographic process using binary chromium masks. A typical photolithographic process using binary chromium masks is shown in Figure 1. First, a photo resist is spin-coated on a substrate. Next, a chromium photo mask of a desired pattern is set on the photo resist. Subsequently, the photo resist is exposed through the photo mask using a mask aligner or stepper. After such exposure, the exposed portion of the photo resist is removed by a development process. The substrate is then etched by any suitable etching method such as plasma etching by RIE (Reactive Ion Etching), ion beam milling, or wet chemical etching. Lastly, a remaining photo resist is stripped away to produce the final binary grating.

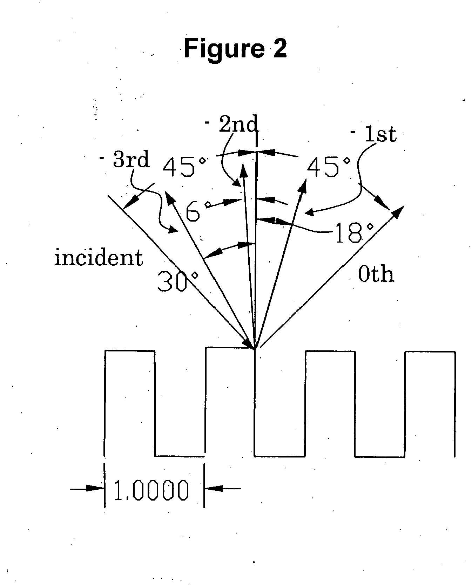

An example of a binary grating constructed in the aforementioned manner and having an incident light beam is shown in Figure 2.

The binary grating shown in Figure 2 has a period of 1.00 $\mu$m, and a duty ratio of 50%. The binary grating shown in Figure 2 is subjected to a TE mode (S-polarized) incident beam of light having a wavelength of 405 nm and an incident angle of 45° from a grating normal. The surface of the binary grating is silver coated to have a refractive index of n1=0.063116801 for a real part and n2=4.8182597 for an imaginary part. The depth of the grating is varied as a simulation parameter.

As shown in Figure 2, the $0^{th}$ order beam is completely reflected by the binary grating similar to the reflection by a mirror, and the diffraction angle of the $0^{th}$ order beam is 45°. The $-1^{st}$ order beam is diffracted by an angle of 18°, the $-2^{nd}$ order beam is diffracted by an angle of -6°, and the $-3^{rd}$ order beam is diffracted by an angle of -30°. As shown in Figure 2, all of the angles are measured from a grating normal. Angles measured clockwise from the grating normal are positive angles and angles measured counter-clockwise are negative angles. Thus, the incident light and the different orders of the diffracted light can be at positive or negative angles depending on which side of the grating normal they appear.

Although such a binary grating splits an incident beam of light into many orders of light, the majority of the incident light is distributed into the beams of the $0^{th}$ order and the $\pm 1st$ order. This is demonstrated in Table 1 below which provides the diffraction efficiency for the example of Figure 2 for a grating depth of 0.1 $\mu$m. The diffraction efficiency is significantly higher for the $0^{th}$ and $-1^{st}$ order of light than the $-2^{nd}$ and $-3^{rd}$ order of light.

**Table 1: Diffraction Efficiency of the Binary Grating Shown in Figure 2**

| Depth | $0^{th}$ | $-1^{st}$ | $-2^{nd}$ | $-3^{rd}$ |
|---|---|---|---|---|
| 0.1 $\mu$m | 0.536545 | 0.31097 | 0.094375 | 0.054346 |

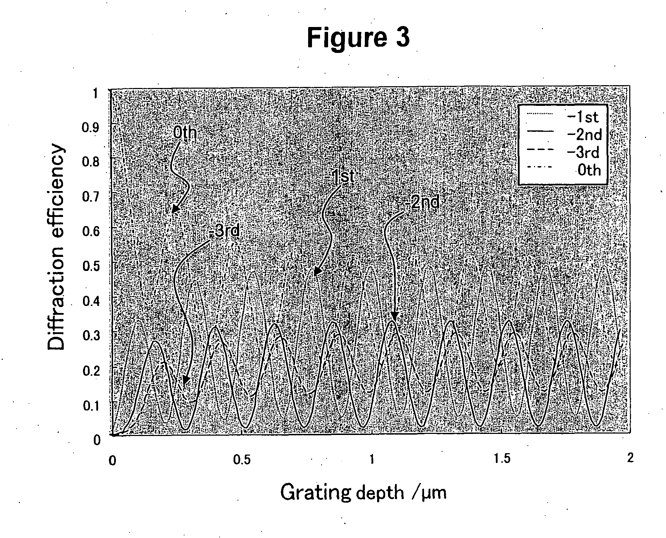

The grating depth, while not being related to the diffraction angle, does have a relationship with the diffraction efficiency as discussed next. The diffraction efficiency of an $m^{th}$ order beam is defined as a ratio of the power of the incident beam and the power of the $m^{th}$ diffracted beam. Figure 3 depicts the diffraction efficiency at various grating depths for each of the $0^{th}$, $-1^{st}$, $-2^{nd}$, and $-3^{rd}$ orders of diffracted light for the binary grating shown in Figure 2. From a comparison of the orders of diffracted light shown in Figure 3, it is clear that the diffraction efficiency for the binary grating decreases as the order increases.

Based on Figure 3 and Table 1, a first notable feature of binary gratings is that the diffraction efficiency for each of the diffracted orders of light is no greater than 50%. Also, the majority of the diffracted beam energy is accumulated into the $0^{th}$ order and $-1^{st}$ order of diffracted light in binary gratings. Particularly, as reflected in Table 1 for the example in which the binary grating of Figure 2 has a depth of 0.1 $\mu$m, almost 85% of the incident beam is occupied by the $0^{th}$ order diffracted beam and the $-1^{st}$ order diffracted beam. The other 15% of the incident beam is shared by the remaining orders of diffracted light. Although the $0^{th}$ order diffracted beam provides the highest efficiency, it is not possible to change the angle of diffraction for the $0^{th}$ order diffracted beam and, as a result, it is not suitable for practical applications. Therefore, the $\pm 1st$ order of diffracted light is used in binary gratings for splitting the beam into a desired direction.

A second notable feature of binary gratings is that the diffraction efficiency oscillates in relation to the grating depth as shown in Figure 3. As a result of this characteristic, multiple depths can be selected for a particular order of a diffracted beam for maximizing the diffraction efficiency. However, in order to minimize any potential manufacturing defects when producing the binary gratings, the depth corresponding to a first peak of the oscillating diffraction efficiency is typically selected since a shallower or smaller grating depth results in less defects and a better yield of acceptable binary gratings during the manufacturing process. For example, the first peak of the -1st order diffracted beam shown in Figure 3 corresponding to a grating depth of 0.1 $\mu$m would be selected.

While current optical disc technologies such as DVD, DVD-R, DVD+R, DVD-RW, DVD+RW, and DVD-RAM use a red laser (680 nm wavelength) to read and write data, the newly emerging optical disc formats such as Blu-ray disc (BD) and HD (high-density) use a blue laser (405 nm wavelength). By using the shorter blue wavelength, it is possible to focus the laser beam with greater precision and tightly pack a larger amount of data onto the disc. However, compared to the longer wavelengths used for the current optical discs, two problems exist in connection with use of the shorter wavelength. The first problem is that the photo-electron transformation efficiency is low for the shorter wavelength. The second problem is that the reflectance of the reflective coating on the grating tends to be insufficient for the shorter wavelength. As a result of these problems, the available amount of laser energy is lower in connection with these newly emerging optical disc formats. Therefore, there is currently a strong need for diffraction gratings which are effective to provide higher efficiencies to compensate for the lower amount of laser energy and which are relatively easy to manufacture using currently available manufacturing techniques.

## SUMMARY OF THE INVENTION

The present invention is directed to solving the afore-mentioned problem by providing multi-level and gray-level diffraction gratings capable of achieving a high diffraction efficiency, and for providing effective design methods for designing and using the diffraction gratings in beam splitters and optical pick-up devices.

According to the present invention, a diffraction grating is provided for use in an optical pick-up device. The diffraction grating includes at least two partitions each including a plurality of grooves forming a periodic predetermined shape. The plurality of grooves contained in at least one of the at least two partitions have a period to provide a predetermined angle of at least one of +m and -m orders of diffracted light $\theta_{dif}$ for a predetermined angle of incident light $\theta_{in}$ (m is an integer greater than 1, and $\theta_{in}$ and $\theta_{dif}$ are measured from a grating normal) as follows: period = m x p, wherein: p = $\pm\lambda$ / (sin $\theta_{in}$ - sin $\theta_{dif}$); the $\pm$ corresponds to the sign of the at least one of +m and, -m orders of diffracted light; and $\lambda$ = wavelength of the incident light.

According to another aspect of the present invention, a diffraction grating is provided for use in an optical pick-up device, wherein the diffraction grating comprises at least two partitions each including a plurality of grooves forming a periodic predetermined shape. The plurality of grooves contained in a first one of the at least two partitions are designed for use with one of +1st and -1st t orders of diffracted light having a first predetermined angle of diffraction for a first predetermined angle of incident light, and the plurality of grooves contained in a second one of the at least two partitions are designed for use with one of +m and -m orders of diffracted light having a second predetermined angle of diffraction for a second predetermined angle of incident light, wherein m is an integer greater than 1.

According to another aspect of the present invention, a beam splitter is provided for splitting a beam of light reflected from an optical recording medium . The beam splitter is disposed along a travel path of light between a light emitting element and the optical recording medium, the beam splitter comprising a polarization beam splitter surface operable to direct light emitted from the light emitting element towards the optical recording medium and to direct light reflected from the optical recording medium towards a diffraction grating, the diffraction grating being disposed to receive the light directed by the polarization beam splitter. The diffraction grating comprising at least two partitions each including a plurality of grooves forming a periodic predetermined shape. The plurality of grooves contained in at least one of the at least two partitions have a period to provide a predetermined angle of at least one of +m and -m orders of diffracted light $\theta_{dif}$ for a predetermined angle of incident light $\theta_{in}$ (m is an integer greater than 1, and $\theta_{in}$ and $\theta_{dif}$ are measured from a grating normal) as follows: period = m x p; wherein: p = $\pm$ $\lambda$ / (sin $\theta_{in}$ - sin $\theta_{dif}$); the $\pm$ corresponds to the sign of the at least one of +m and -m orders of diffracted light; and $\lambda$ = wavelength of the incident light.

According to another aspect of the present invention, an optical pick-up comprises: a light emitting element operable to emit light along a travel path to the optical recording medium; a diffraction grating operable to receive light which has been reflected from the optical recording medium, the diffraction grating comprising at least two partitions each including a plurality of grooves forming a periodic predetermined shape; wherein the plurality of grooves contained in at least one of the at least two partitions have a period to provide a predetermined angle of at least one of +m and -m orders of diffracted light $\theta_{dif}$ for a predetermined angle of incident light $\theta_{in}$ (m is an integer greater than 1, and $\theta_{in}$ and $\theta_{dif}$ are measured from a grating normal) as follows: period = m x p; wherein: p = $\pm$ $\lambda$ / (sin $\theta_{in}$ - sin $\theta_{dif}$); $\pm$ corresponds to the sign of the at least one of +m and -m orders of diffracted light; and $\lambda$ = wavelength of the incident light; and a photo detector operable to receive light diffracted from the diffraction grating and convert the received light into a digital signal.

According to another aspect of the present invention, a method is provided for designing a diffraction grating for use in an optical pick-up device, the method comprising: providing at least two partitions on the diffraction grating; providing a plurality of grooves forming a periodic predetermined shape on each of the at least two partitions; setting a period of the plurality of grooves contained in at least one of the at least two partitions to provide a predetermined angle of at least one of +m and -m orders of diffracted light $\theta_{dif}$ for a predetermined angle of incident light $\theta_{in}$ (m is an integer greater than 1, and $\theta_{in}$ and $\theta_{dif}$ are measured from a grating normal) as follows: period = m x p; wherein: $p = \pm \lambda / (\sin \theta_{in} - \sin \theta_{dif})$; the $\pm$ corresponds to the sign of the at least one of +m and -m orders of diffracted light; and $\lambda$ = wavelength of the incident light.

According to another aspect of the present invention, a method is provided for designing a diffraction grating for use in an optical pick-up device, the diffraction grating including a plurality of partitions each having a plurality of grooves which form a periodic predetermined shape and which have a wavelength of incident light $\lambda$, a predetermined angle of incident light $\theta_{in}$, a predetermined angle of diffracted light $\theta_{dif}$, a predetermined period = p0, and a predetermined depth = d0. The method comprising: selecting one of the plurality of partitions; setting an m order of diffracted light to be one of +1 (positive order) and -1 (negative order); calculating a period p of the plurality of grooves using the following equation: $p = m\lambda / (\sin \theta_{dif} - \sin \theta_{in})$ ; determining if p is greater than p0 and: if p is not greater than p0, then setting m to be one of m+1 (positive order) and m-1 (negative order) and repeating the calculating and determining; and if p is greater than p0, then obtaining a grating depth d yielding a maximum diffraction efficiency; deciding if the obtained grating depth is greater than d0 and, if the obtained grating depth is not greater than d0, then setting m to be one of m+1 (positive order) and m-1 (negative order) and repeating the calculating, determining, and deciding; and if the obtained grating depth is greater than d0, then the obtained grating depth d, period p, and m order are selected as design parameters for the selected partition; repeating the selecting, setting, calculating, determining, and deciding for the remaining ones of the plurality of partitions.

According to another aspect of the present invention, a method is provided for designing a diffraction grating for use in an optical pick-up device, the method comprising: providing at least two partitions on the diffraction grating; forming a plurality of grooves having a periodic predetermined shape on each of the at least two partitions; selecting a period of the plurality of grooves contained in a first one of the least two partitions to use one of +1st and -1st t orders of diffracted light having a first predetermined angle of diffraction for a first predetermined angle of incident light; and selecting a period of the plurality of grooves contained in a second one of the at least two partitions to use one of +m and -m orders of diffracted light having a second predetermined angle of diffraction for a second predetermined angle of incident light, wherein m is an integer greater than 1.

According to another aspect of the present invention, an optical pick-up is provided which comprises: a light emitting element operable to emit light to an optical medium; a diffraction grating including a first portion and a second portion operable to diffract light reflected from the optical medium into first diffracted light and second diffracted light, respectively; a first photo-detecting section operable to detect the first diffracted light which is diffracted from the first portion of the diffraction grating; and a second photo-detecting section operable to detect the second diffracted light which is diffracted from the second portion of the diffraction grating; wherein an order of the first diffracted light is greater than an order of the second diffracted light.

According to another aspect of the present invention, an optical disc apparatus is provided which comprises: a light emitting element operable to emit light to an optical disc; a diffraction grating including a first portion and a second portion operable to diffract light reflected from the optical disc into first diffracted light and second diffracted light, respectively; a first photo-detecting section operable to detect the first diffracted light which is diffracted from the first portion of the diffraction grating; and a second photo-detecting section operable to detect the second diffracted light which is diffracted from the second portion of the diffraction grating; wherein an order of the first diffracted light is greater than an order of the second diffracted light, and the first diffracted light and the second diffracted light are used for a focusing signal and a tracking signal, respectively.

According to the various aspects of the invention mentioned above, the plurality of grooves can be designed to have a grating depth = m x d, wherein d is a depth corresponding to a maximum diffraction efficiency for period p.

According to the various aspects of the invention mentioned above, the diffraction grating can be one of a gray-level grating and a multi-level grating and the predetermined shape can be one of a blazed saw-tooth shape and a stair-case shape, respectively.

Further areas of applicability of the present invention will become apparent from the detailed description provided hereinafter. It should be understood that the detailed description and specific examples, while indicating the preferred embodiments of the invention, are intended for purposes of illustration only and are not intended to limit the scope of the invention.

BRIEF DESCRIPTION OF THE DRAWINGS

The above and other objects, features, and advantages of present invention will be more clearly understood from the following detailed description taken in conjunction with the accompanying drawings, in which:

Figure 1 is a diagram illustrating a photolithographic process for producing a conventional binary grating;

Figure 2 is a diagram depicting a cross section view of a binary grating subjected to an incident beam of light at 45°;

Figure 3 is a graph showing diffraction efficiencies for various grating depths of the binary grating depicted in Figure 2;

Figure 4 is a diagram depicting a cross section view of a blazed diffraction grating according to the present invention;

Figure 5 is a diagram depicting a cross section view of a stair-case shaped diffraction grating according to the present invention;

Figure 6 is a diagram depicting a cross section view of a blazed diffraction grating subjected to an incident beam of light at 45° according to the present invention;

Figure 7 is a graph showing diffraction efficiencies for various depths of the blazed diffraction grating depicted in Figure 6 according to the present invention;

Figure 8 is a diagram depicting a cross section of a saw-tooth profile of a blazed diffraction grating including RMS noise according to the present invention;

Figure 9A is a diagram depicting a cross section view of a blazed diffraction grating with -1st order diffracted light and Figure 9B is a corresponding graph of the diffraction efficiency;

Figure 10A is a diagram depicting a cross section view of a blazed diffraction grating with -2nd order diffracted light according to the present invention, and Figure 10B is a corresponding graph of the diffraction efficiency;

Figure 11 is a top view of blazed diffraction grating configurations containing plural partitions and top view of a photo-detector according to the present invention;

Figure 12 is a graph showing diffraction efficiencies for various depths of a blazed diffraction grating similar to the one shown in FIG. 6 except with the period doubled according to the present invention;

Figure 13 is a flowchart depicting a method for designing a blazed diffraction grating according to the present invention;

Figure 14 is a diagram depicting a comparison of the cross section views of a blazed diffraction grating according to the present invention and a binary diffraction grating;

Figure 15 is a diagram depicting the cross section view of a digitized profile of a blazed diffraction grating according to the present invention;

Figure 16 is a diagram depicting a top view of a blazed diffraction grating with curved grooves and gradually varying periods according to the present invention;

Figure 17 is a diagram depicting the cross section view of a blazed diffraction grating having a gradually varying depth according to the present invention;

Figure 18 is a diagram depicting a beam splitter according to the present invention;

Figures 19A and 19B are diagrams depicting an optical pick-up device having a reflective diffraction grating and a refractive diffraction grating, respectively, according to the present invention; and

Figure 20 is a diagram depicting an optical disc apparatus according to the present invention.

DETAILED DESCRIPTION

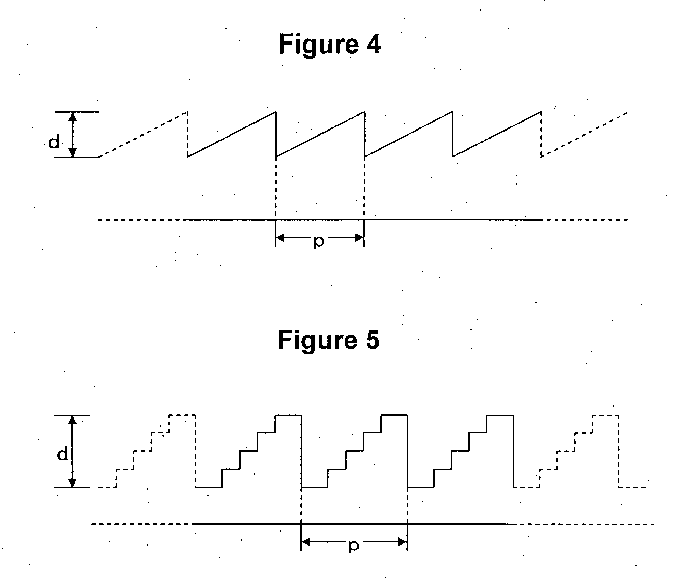

Referring to Figures 4 and 5, examples of a gray-level diffraction grating and a multi-level diffraction grating, respectively, according to the present invention are shown. Particularly, Figure 4 shows a blazed diffraction grating having a period of p and a grating depth of d as an example of the gray-level diffraction grating, and Figure 5 shows a staircase-shaped diffraction grating having a period of p and a grating depth of d as an example of the multi-level diffraction grating. Although the remaining description will be directed towards the characteristics and features of the blazed diffraction grating as a preferred embodiment of the present invention, it should be understood that these characteristics and features are also applicable to other gray-level type and multi-level type diffraction gratings, such as the stair-case shaped grating shown in Figure 5.

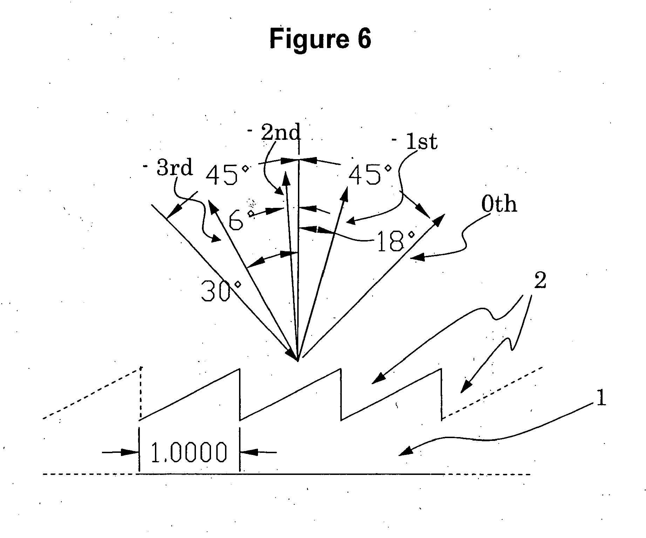

Referring to Figure 6 which shows a cross section view of an example of a blazed diffraction grating 1, a plurality of blazed grooves 2 forming a saw-tooth shape as a predetermined periodic shape are provided on the grating. For comparison purposes, the same parameters for the binary grating depicted in Figure 2 are applied to the blazed grating shown in Figure 6. Specifically, the blazed grating is subjected to a TE mode (S-polarized) incident beam of light having a wavelength of 405 nm and an incident angle of 45° from the grating normal. The depth of the grating is varied as a simulation parameter. As shown in Figure 6, the diffraction angle of the 0th order light beam is 45°, the -1st order light beam is diffracted by an angle of 18°, the -2nd order light beam is diffracted by an angle of -6°, and the -3rd order light beam is diffracted by an angle of -30°. These diffraction angles are the same as the diffraction angles of the binary grating shown in Figure 2. The reason that the angles are the same for both the binary diffraction grating and the blazed diffraction grating is because the following equation, used for calculating the diffraction angle of m$^{th}$ order diffracted beam, is applicable not only for the binary gratings, but also for blazed gratings:

Equation 1: $$p(\sin\theta_{dif} - \sin\theta_{in}) = m\lambda$$

In Equation 1, $p$ is the period of the grooves, and $\theta_{in}$ and $\theta_{dif}$ are the incident and diffraction angles, respectively, each being measured with respect to the grating normal.

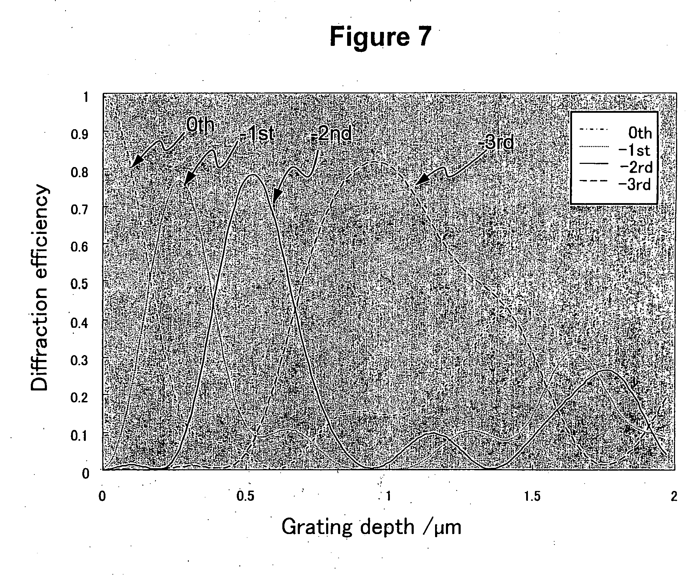

Figure 7 is a graph showing diffraction efficiencies for various depths of different orders of light diffracted from the blazed diffraction grating shown in Figure 6. From a comparison of the graphs of Figure 7 and Figure 3, two particular characteristics of the blazed gratings are noteworthy. The first characteristic is that the suitable choice for a grating depth of a blazed grating generally provides a high diffraction efficiency for one of the different orders of diffracted light beams. For example, using the graph of Figure 7, if 0.52 $\mu$m is selected as a desired grating depth, then the -2$^{nd}$ order light beam is the only beam which provides a highest diffraction efficiency of about 78%. The diffraction efficiency for each of the remaining orders is no greater than about 10% for this desired grating depth. The second characteristic of blazed gratings is that there exists only one optimal depth which provides a peak efficiency for each of the different orders of diffracted light beams. Stated differently, each of the different orders of diffracted light has a single maximum peak at a single grating depth. For example, if the graph of Figure 7 for the -3$^{rd}$ order of diffracted light is examined, it is apparent that there exists only one optimal depth of 0.95 $\mu$m which provides the peak efficiency of about 81%. These two described characteristics of blazed diffraction gratings are illustrated in Table 2 below which reflects the relationship between the grating depth and the peak efficiency of different orders of diffracted light.

**Table 2: Peak Diffraction Efficiencies and Corresponding Grating Depth for Each Order of Diffracted Light**

| Depth | 0$^{th}$ | -1$^{st}$ | -2$^{nd}$ | -3$^{rd}$ |
|---|---|---|---|---|
| 0.27 $\mu$m | 0.159046 | 0.765851 | 0.056377 | 0.008131 |
| 0.52 $\mu$m | 0.031826 | 0.101763 | 0.783666 | 0.067201 |
| 0.95 $\mu$m | 0.149511 | 0.000681 | 0.004259 | 0.817379 |

By comparing Table 1 and Table 2, it is quite apparent that blazed diffraction gratings provide a greater diffraction efficiency than binary diffracted gratings. Thus, blazed diffraction gratings provide a significant benefit over binary gratings from an efficiency standpoint. Of course, an important consideration which must be taken into account is the manufacturability of the blazed gratings. Particularly, two dimensions to be considered during the manufacture of blazed diffraction gratings are the grating depth and the period of the blazed grooves which will be described next.

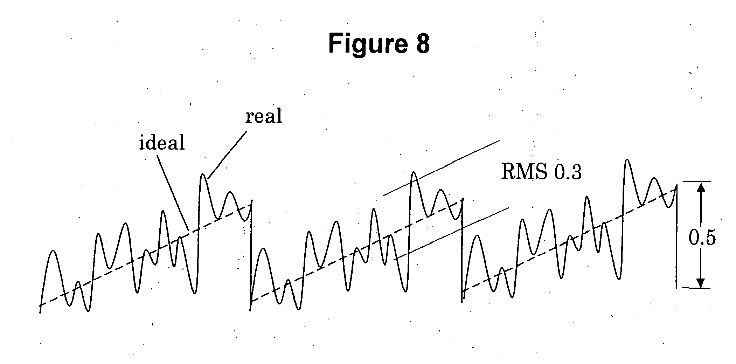

Starting first with a discussion of the considerations of the grating depth of the blazed diffraction gratings, the difficulty of producing a blazed grating when the grating depth is shallow must be addressed. The shallow grating depth is of particular concern since, as mentioned earlier, the Blu-ray and HD (high-density) disc formats require the use of a blue laser having a relatively small wavelength of light (405 nm). For example, suppose a design requirement is for the use of the -2$^{nd}$ order diffracted light beam in the exemplary blazed grating shown in Figure 6. In this case, the grating depth of about 0.52 $\mu$m must be used to achieve the maximum efficiency of about 78% as shown in Table 2 above. For production of the blazed diffraction grating, a photolithography process similar to the earlier described production of the binary grating is typically used. The photolithographic process is used to make a saw-tooth profile in a photo-resist which is spun on a substrate and then the substrate is etched by plasma etching to transfer the profile into the substrate. However, the process to produce the blazed diffraction includes steps which introduce noise on the saw tooth profile. As an example of such noise, reference is next made to Figure 8 in which a desired blazed diffraction grating is shown by "ideal" and the actual blazed diffraction grating obtained by a grayscale laser writer is shown by "real". As reflected in Figure 8, an available grayscale laser writer produces about 0.3 $\mu$m RMS (Root Mean Square) noise on the profile of the photo resist. This noise is significant and cannot be neglected due to the fact that the desired depth of each of the blazed grooves is only about 0.5$\mu$m. Thus, since it is difficult to make a smooth or a clear multi-step slope in one saw-tooth profile, it is necessary to cut a deeper saw tooth profile.

The second consideration of the blazed grating is the period of the blazed grooves. When the shorter blue laser with a 405 nm wavelength is used and it is desired to diffract a beam with a steeper angle, then the required period must be small. This relationship follows from Equation 1 described earlier since, if the incident angle and diffraction angle are fixed and the smaller wavelength of 405nm is used, then the period must also be made smaller. A shorter period is also required when the incident angle and wavelength are fixed, and the angle of the diffracted order of light is small (i.e.,

that is, when the incident angle and diffracted angle combined together results in a large angle). Tables 3(a) provided below shows the relationship between the period of the blazed grooves and the different wavelengths of incident light. Table 3(b) provided below shows the relationship between the period of the blazed grooves and the diffraction angle (diffraction angle is with respect to the grating normal).

**Table 3(a): Relationship between Wavelength and Period**

| Fixed parameters | Wavelength | Period |
|---|---|---|
| Order = -1$^{st}$ | 0.785 $\mu$m | 2.75 $\mu$m |
| Diffraction angle = 25° | 0.68 $\mu$m | 2.39 $\mu$m |
| Incident angle = 45° | 0:405 $\mu$m | 1.42 $\mu$m |

As an illustrative example, Table 3(a) indicates that, for a -1$^{st}$ order of diffracted light, a diffraction angle of 25°, and an incident angle of 45°, the grating period of a blazed grating decreases as the wavelength decreases.

**Table 3(b): Relationship between Diffraction angle and Period**

| Fixed parameters | Diffraction angle | Period |
|---|---|---|
| Order = -1$^{st}$ | 40° | 6.21 $\mu$m |
| Wavelength = 0.405$\mu$m | 30° | 1.93 $\mu$m |
| Incident angle = 45° | 20° | 1.09 $\mu$m |

As another illustrative example, Table 3(b) indicates that, for a -1$^{st}$ order of diffracted light, a wavelength of 0.405 $\mu$m, and an incident angle of 45°, the grating period of a blazed grating decreases as the diffraction angle decreases.

In view of the foregoing relationships and constraints regarding the grating depth and period of the blazed diffraction grating, the burden and cost of manufacturing the blazed diffraction gratings must also be made minimal.

However, due to the fact that a resolution of a stepper or a mask aligner used during the exposure step during manufacturing of the blazed grating is limited, the minimum achievable grating period is limited by the resolution of these exposing facilities. Currently, a "g-line" exposure light (436nm) is used in a stepper having a feature size (resolution) of about 1 micron. Thus, with the use of the g-line stepper, it is not possible to fabricate a grating having a period less than 1 micron. An alternative to the g-line stepper is an "i-line" stepper which has a much shorter wavelength of 365 nm and a feature size of approximately 0.5 micron. However, even with the use of the i-line stepper, fabrication of a grating having any dimension less than 0.5 micron is not possible. Similarly, all steppers have a limited feature size and the grating period is always limited by the wavelength of the exposure as long as the conventional designing methods are used to produce the gratings for use in the conventional manner.

The description provided next is directed towards the manner in which the present invention is able to design and enable manufacturability of high efficiency diffraction gratings for effective use in beams splitters and optical pickup devices.

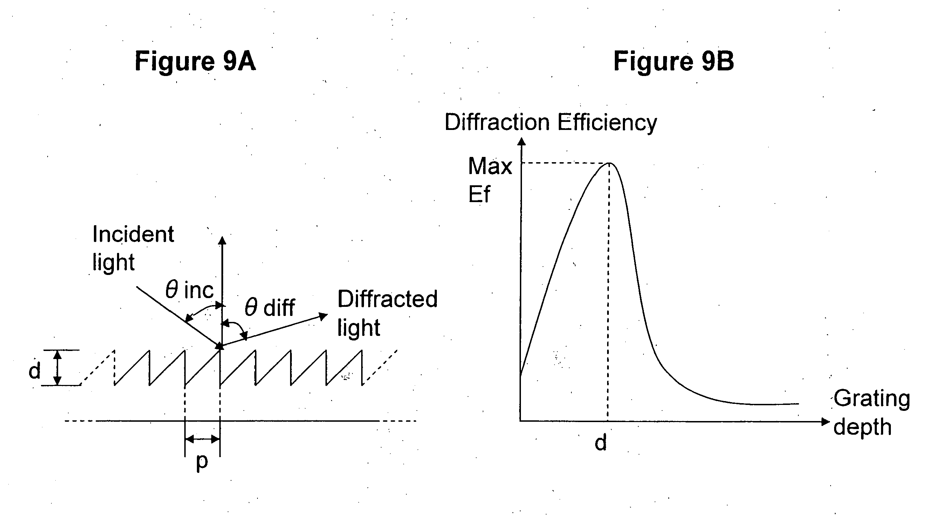

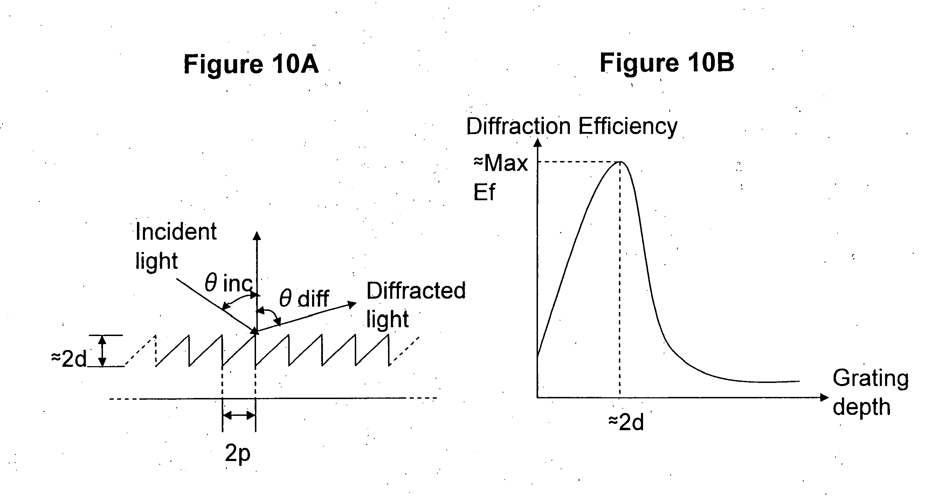

Figure 9A shows an illustrative example of a blazed grating using a -1$^{st}$ order of diffracted light having the fixed characteristics of: wavelength of incident light = $\lambda$; incident angle = $\theta_{inc}$; and diffracted angle = $\theta_{diff}$. The optimum grating depth is d and the period p is calculated using Equation 1. As shown in Figure 9B, such a blazed diffraction grating using the -1$^{st}$ order of diffracted light has a single maximum efficiency at Max Ef corresponding to the grating depth of d. However, in the event that the period of p and grating depth of d are below allowable manufacturing thresholds, then it would be necessary to increase the period p and grating depth d while maintaining a high level of diffraction efficiency. According to the present invention, it is possible to increase the period and the depth to be above predetermined manufacturing thresholds without affecting the aforementioned fixed characteristics by using a higher order of diffracted light. Specifically, if the -1$^{st}$ order of diffracted light is changed to the -2$^{nd}$ order of diffracted light, then it is possible to achieve a high level of diffraction efficiency without requiring a change of the fixed characteristics by doubling the period from p to 2p and approximately doubling the grating depth from d to =2d as shown in Figure 10A. As shown in Figure 10B, the diffraction efficiency for the grating depth of approximately 2d is =Max Ef. Thus, by using the -2$^{nd}$ order beam of light and by doubling the period and approximately doubling the grating depth, it is possible to use the same incident beam and the same diffraction angle of the -1$^{st}$ order light beam to obtain approximately the same diffraction efficiency achieved using the -1$^{st}$ order light beam.

Thus, to enable effective use of a higher order of diffracted light, the plurality of grooves are provided with a period to provide a predetermined angle of at least one of +m and -m orders of diffracted light $\theta_{dif}$ for a predetermined angle of incident light $\theta_{in}$ (m is an integer greater than 1, and $\theta_{in}$ and $\theta_{dif}$ are measured from a grating normal) as follows:

$$\text{period} = m \times p;$$

wherein:

$$p = \pm \lambda / (\sin \theta_{in} - \sin \theta_{dif});$$

$\pm$ corresponds to the sign of the at least one of +m and -m orders of diffracted light; and
$\lambda$ = wavelength of the incident light, wherein $\lambda$ is in a range of 200 nm to 790 nm.

Also, when using the higher order of diffracted light, the plurality of grooves can be provided to have a grating depth approximately equal to m x d, wherein d is a depth corresponding to the maximum diffraction efficiency for p. The optimal grating depth can be obtained by using a scalar theory when the angle of diffracted light is not too large. Alternatively, the optimal grating depth can be obtained by calculating the diffraction efficiency using either a commercially available product such as, for example, GSOLVER, or a self made algorithm/program which is based on RCWM (Rigorous Coupled Wave Method).

By using the aforementioned method according to the present invention which uses a higher order of diffracted light than the $\pm$ 1st order, it is possible to design a blazed diffraction grating to have a period and a grating depth which meet and/or exceed predetermined minimum manufacturing thresholds.

It is noted that the particular values in the aforementioned equations and relationships are subject to slight variances/tolerances without departing from the novel concepts of the present invention. These variances/tolerances are attributed to the very small dimensions involved and also to the inherent difficulties of precise measurement of such small dimensions. For example, in the case of a refractive type diffraction grating, the diffraction angle $\theta_{dif}$ is measured by determining the position of the photo-detector relative to a reference axis (for example, incident beam axis). However, since the surface of the photo-detector upon which the light hits has a particular width, it is difficult to ascertain the exact point on the surface of the photo-detector that the diffracted light hits. Thus, the width of the photo-detector introduces a tolerance. As a result, it should be appreciated that slight variances/tolerances of values in the aforementioned equations and relationships are also encompassed within the novelty of the present invention. For example, it is acceptable for the period of the plurality of grooves to slightly deviate from m x p, and it is acceptable for the grating depth of the plurality of grooves to slightly deviate from m x d.

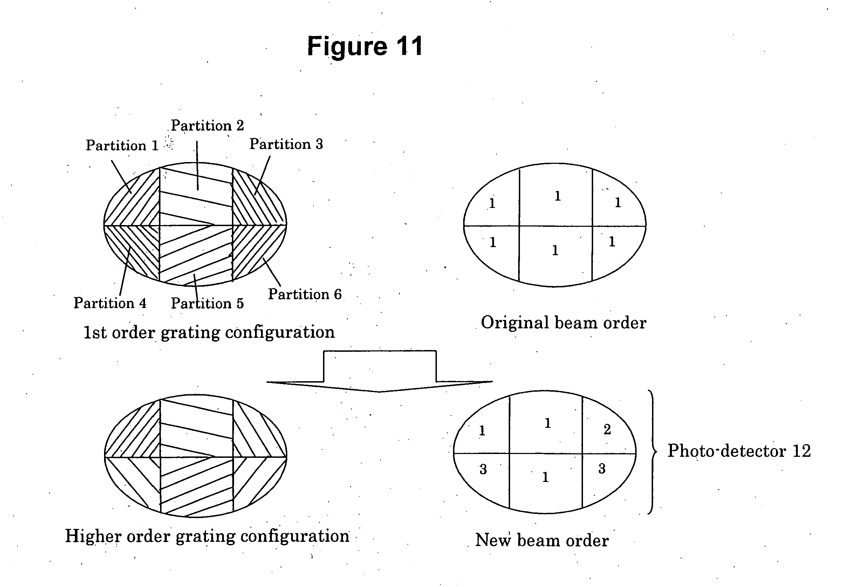

Referring next to Figure 11, an exemplary top view comparison of a 1st order grating configuration and a higher order grating configuration according to the present invention is depicted. As shown in Figure 11, the blazed diffraction gratings comprises a plurality of partitions which each include a plurality of grooves forming a periodic predetermined shape such as, for example, a saw-tooth or stair-case shape. It is noted that although the exemplary blazed diffraction gratings shown in Figure 11 have six partitions corresponding to six portions of a photo-detector 12, the number of partitions can be increased or decreased depending on particular design criteria. The particular number and arrangement of partitions is generally provided so as to correspond to a number and arrangement of partitioned areas provided on the photo-detector 12. For example, if the photo-detector is provided with a first photo-detecting section and a second photo-detecting section, then the diffraction grating would be provided with a first portion and a second portion. As shown in Figure 11, the period of grooves contained in Partitions 3, 4, and 6 in the 1st order grating configuration is small and below minimum manufacturing thresholds which are predetermined. The corresponding original beam order as shown in Figure 11 contains only the 1st order beams. In contrast, the higher order grating configuration according to the present invention increases the periods of Partition 3, 4 and 6 by using higher order beams. Particularly, as shown in Figure 11, according to the higher order grating configuration of the present invention, Partitions 3, 4, and 6 are provided with second and third order diffracted beams. Thus, the new beam order as shown in Figure 11 contains not only 1st order diffracted beams, but also higher order diffracted beams. It is not necessary to change the orders of Partitions 1, 2, and 5 in this example since the periods are not small. That is, they are not below the predetermined minimum manufacturing threshold. According to the grating of the present invention, a plurality of partitions are provided on the grating which may include a mixture of different orders of diffracted light beams to include 0th order, $\pm$ 1st orders of diffracted light, and orders of diffracted light which are higher than the $\pm$1st order (i.e., $\pm$2nd, $\pm$3rd, etc..). Figure 11 is provided as an example of such a mixture of different orders of diffracted light. It is further noted that the different diffracted light beams detected by the respective different portions of the photo-detector 12 shown in Figure 11 can be used for a focusing signal, a tracking signal, and an aberration signal. For example, a first diffracted light and a second diffracted light could be used for a focusing signal and a tracking signal, respectively.

As mentioned earlier, it is possible to widen the period p without changing the fixed parameters of the predetermined wavelength, the incident angle and the diffraction angle of light. This is achieved by using higher orders of diffracted light such as, for example, by changing the order of m from -1st to -2nd and the period from p to 2p. Thus, by using the second order of diffracted light and doubling the period, the same diffraction angle can be achieved. Moreover, if the doubled period is still too narrow (i.e., still below a predetermined manufacturing threshold), then the period can be tripled by using a -3rd order diffracted light beam. Thus, according to the present invention, by increasing the period such as, for example, doubling or tripling of the period and by changing of the order of diffracted light, there is no change in a desired diffraction angle. This aspect of the present invention is shown by Table 4 below which contains the relationship between the grating period and the diffraction angle for incident light with an angle of 45° and a wavelength of 0.405 $\mu$m. It is noted that N/A (not applicable) is used to indicate that it is not possible to get the diffracted beam for the particular order.

**Table 4: The Diffraction Angle of Each Order for Original, Doubled, and Tripled Grating Periods ($\mu$m)**

| Order | Angle (°) for Period | Angle(°) for 2 X Period | Angle (°) for 3 X Period |
|---|---|---|---|
| -3rd | -30.5236 | 5.7165276 | 17.584185 |
| -2nd | -5.9057994 | 17.584185 | 25.919428 |
| -1st | 17.584185 | 30.305253 | 34.897269 |
| 0th | 45 | 45 | 45 |
| 1st | N/A | 65.451068 | 57.363264 |
| 2nd | N/A | N/A | 77.716473 |
| 3rd | N/A | N/A | N/A |

Thus, as shown in Table 4, the same diffraction angle of 17.584185 can be obtained by changing the diffracted light order of -1st to either the -2nd order or the -3rd order, and by doubling or tripling the period, respectively.

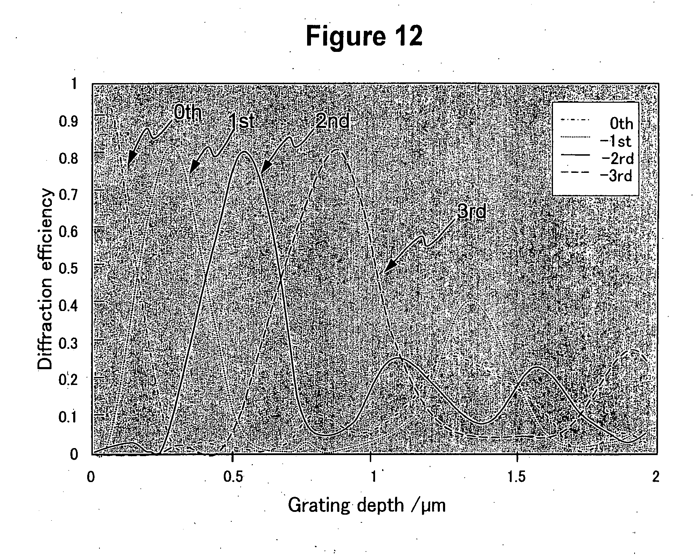

Moreover, as mentioned earlier, the grating depth is also approximately doubled or tripled when the period is doubled or tripled, respectively. Figure 12 depicts a graph of the diffraction efficiencies for various grating depths using the same characteristics as used for Figure 7 except that the period is doubled. Also, Table 5 below contains the peak efficiencies for each order of diffracted light for different grating depths. From Table 5, if the grating period is doubled, then the -2nd order light is used and the peak efficiency is at a grating depth of 0.58 $\mu$m which is approximately double that of 0.27 $\mu$m used for the 1st order light beam. If the -2nd order light beam is difficult to fabricate, then the -3rd order light beam can be used which results in a peak efficiency at a grating depth of 0.83 $\mu$m which is approximately three times the grating depth of 0.27$\mu$m.

**Table 5: The Peak Efficiency for Each Beam Order**

| Depth | 0th | -1st | -2nd | -3rd |
|---|---|---|---|---|
| 0.27 $\mu$m | 0.045169 | 0.817253 | 0.045025 | 0.00889 |
| 0.58 $\mu$m | 0.013421 | 0.038709 | 0.793773 | 0.08066 |
| 0.83 $\mu$m | 0.111712 | 0.001226 | 0.037219 | 0.782486 |

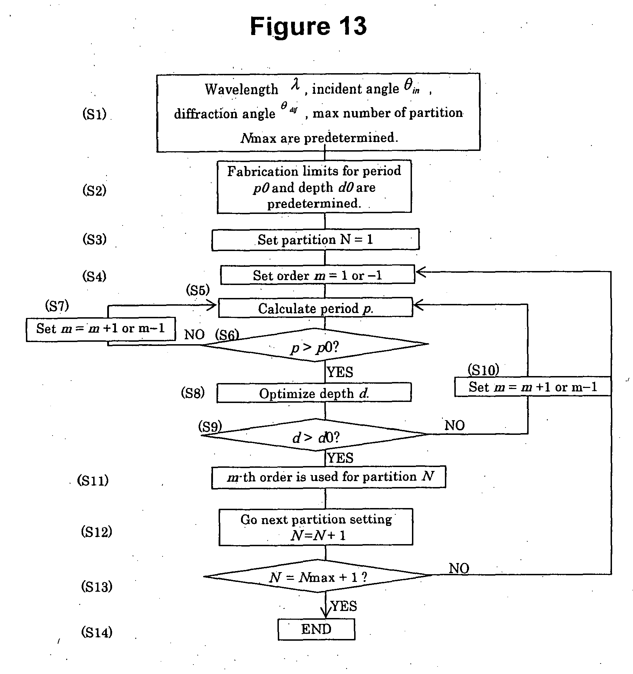

Next, in view of the aforementioned characteristics and relationships of the blazed diffraction gratings, a method according to the present invention for designing a blazed diffraction grating for use in an optical pick-up device will be discussed referring to the flow chart shown in Figure 13. Similar to that shown in Figure 11, the blazed diffraction grating designed by this method includes a plurality of Nmax predetermined partitions, wherein Nmax can be any integer. As mentioned earlier, the number and arrangement of partitions is provided so as to correspond to the partitioned areas located on the photo detector. It is noted that for each of the N partitions, the plurality of blazed grooves are designed so that a particular order of a diffracted light beam resulting in acceptable manufacturing thresholds can be chosen and optimized in terms of the diffraction efficiency for a predetermined incident angle and a predetermined diffraction angle. The plurality of blazed grooves contained in each partition form a periodic predetermined shape and have a wavelength of incident light $\lambda$, incident angle $\theta_{in}$, and diffraction angle $\theta_{dif}$ that are predetermined as indicated in step S1 of Figure 13. The predetermined shape can be, for example, a blazed saw-tooth shape or a stair-case shape. A period p0 and depth d0 are the minimum predetermined manufacturing thresholds as indicated in step S2.

At step S3, the method begins using the first partition by setting N to be 1.

Next, at step S4, the beam order is initially set to be the first beam order by setting m to be 1 for a positive order or -1 for a negative order.

At step S5, the grating period p is calculated using equation (1).

Subsequently, at step S6, a determination is made as to whether the period p calculated in step S5 is greater than p0. If p is not greater than p0, then step S7 is performed. If p is greater than p0, then step S8 is performed.

At step S7, the order is either increased (positive order) or decreased (negative order) by setting either m to be m + 1 (positive order) or m - 1 (negative order). Subsequently, the flow moves back up to step S5.

At step S8, the grating depth d is optimized by calculating the diffraction efficiency using a scalar theory as mentioned earlier, commercial software such as, GSOLVER, for example, or a self-made program based on RCWM (Rigorous Coupled Wave Method).

At step S9, the optimized depth d is compared with d0. If d is not greater than d0, then step S10 is performed. If d is greater than d0, then step S11 is performed.

At step S10, the order is either increased (positive order) or decreased (negative order) by setting either m to m + 1 (positive order) or m - 1 (negative order). Subsequently, the flow move back up to step S5.

At step S11, the $m^{th}$ order is selected as the appropriate order for satisfying the minimum manufacturing thresholds for partition N and step S12 is performed.

At step S12, N is set to be N + 1 to then move on to the next partition and then step S13 is performed.

As step S13, a check is made as to whether all the partitions have completed by checking if N = Nmax +1. If N is not equal to Nmax + 1, then all of the partitions have not been completed and the flow moves back up to step S5. If N is equal to Nmax + 1, then all the partitions have been completed and the procedure ends at step S14.

By providing the aforementioned method for designing a diffraction grating used in a beam splitter according to the present invention, a diffraction grating containing a plurality of partitions can be designed using mixed beam orders including orders which are higher than the first order as shown in Figure 11 so as to meet minimum manufacturing thresholds without sacrificing the diffraction efficiency and overall predetermined characteristics of the blazed diffraction grating.

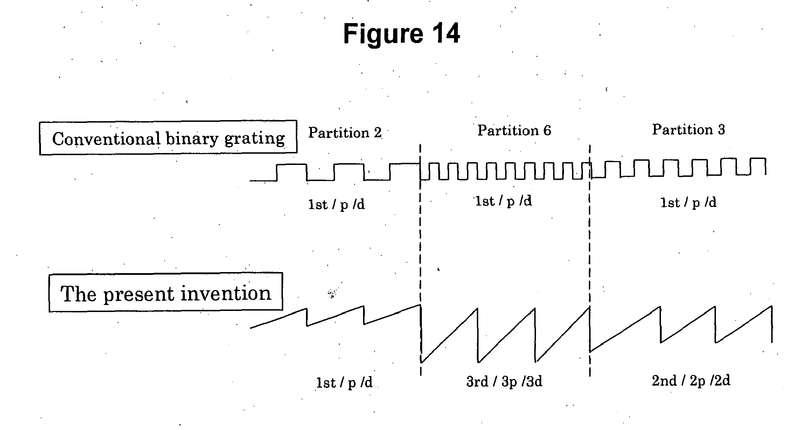

Figure 14 depicts a comparison of cross sectional views of partitions 2, 6, and 3 of Figure 11. It is noted that the symbol "1st/p/d" corresponds to a $1^{st}$ order beam, period p, and grating depth d. As shown in Figure 14, the grating depth over the entire surface of the conventional binary grating including partitions 2, 6, and 3 is the same since it is not possible to perform patterning using different depth exposure during the binary photolithographic process. However, according to the photolithographic process for a blazed diffraction grating, it is possible to perform patterning with different depth exposure. Thus, as shown in Figure 14, the blazed grating of the present invention includes not only the different grating periods of p, 3p, and 2p, but also the different grating depths of d, 3d, and 2d for the three partitions over the entire grating surface.

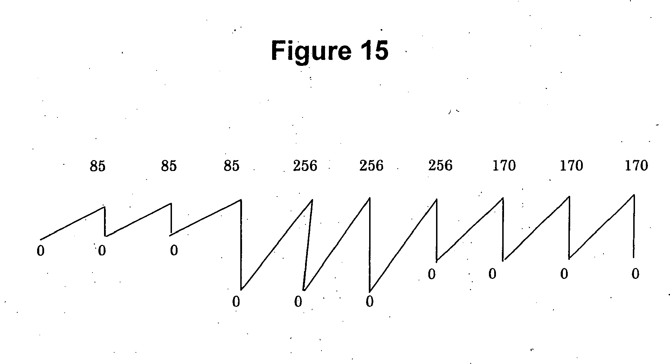

Next, as shown in Figure 15, the depth of the blazed grating according to the present invention can be digitized so as to provide a digitized grating profile. Such digitization can be used to accurately and easily control the grating depth.

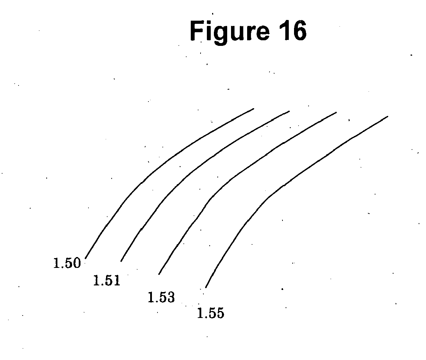

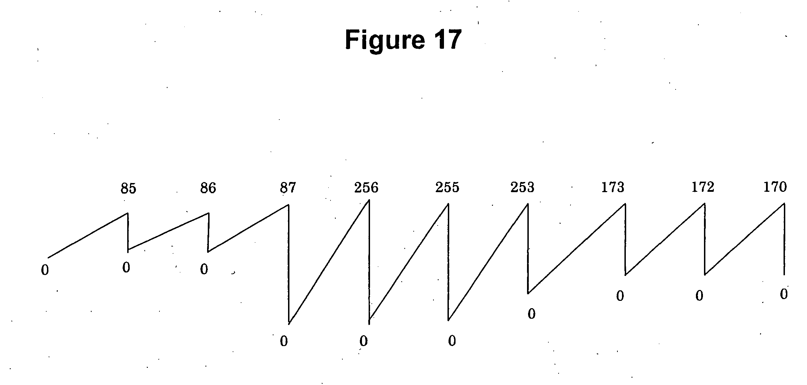

As shown in Figure 16, the period of the grooves can be continuously varied in one partition to provide a continuous change of the diffraction angle. That is, the period of the plurality of grooves is slightly varied from one groove to the next. Also, the grooves can be provided in a curved manner on the grating surface. Also, as depicted in Figure 17, the plurality of grooves can have a grating depth which is continuously varied from one groove to the next. That is, similar to that of the period, the grating depth of the plurality of grooves can be slightly varied from one groove to the next groove.

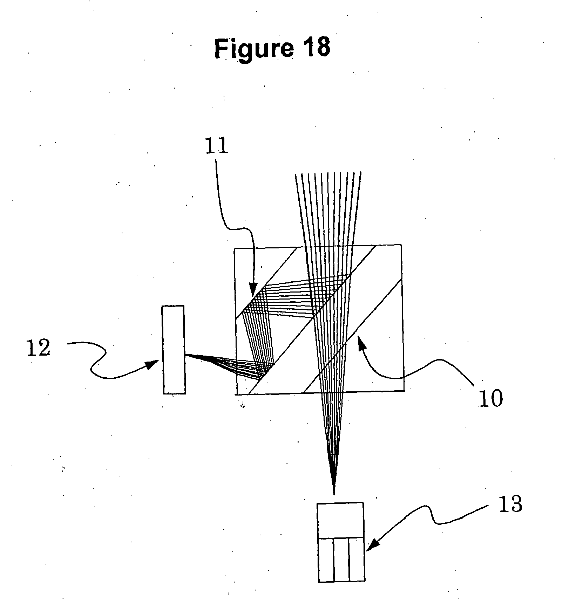

A beam splitter according to the present invention is shown in Figure 18. The beam splitter includes a polarization beam splitter surface 10 and a diffraction grating 11. The beam splitter according to the present invention is used for splitting a beam of light reflected from an optical recording medium . The beam splitter is disposed along a travel path of light between a light emitting element 13 and the optical recording medium. The light emitting element 13 can be a laser diode or any other light source capable of emitting light. As shown in Figure 18, the polarization beam splitter surface 10 is operable to direct light emitted from the light emitting element 13 towards the optical recording medium (light traveling upward) and to direct light reflected from the optical recording medium (light returning downward) towards a diffraction grating 11. The diffraction grating 11 contained in the beam splitter of the present invention corresponds to the diffraction gratings mentioned earlier and can be designed using the methods of the present invention discussed earlier. The diffraction grating 11 is disposed to receive the light directed by the polarization beam splitter 10. The light diffracted by the diffraction grating 11 is then received by the photo-detector 12.

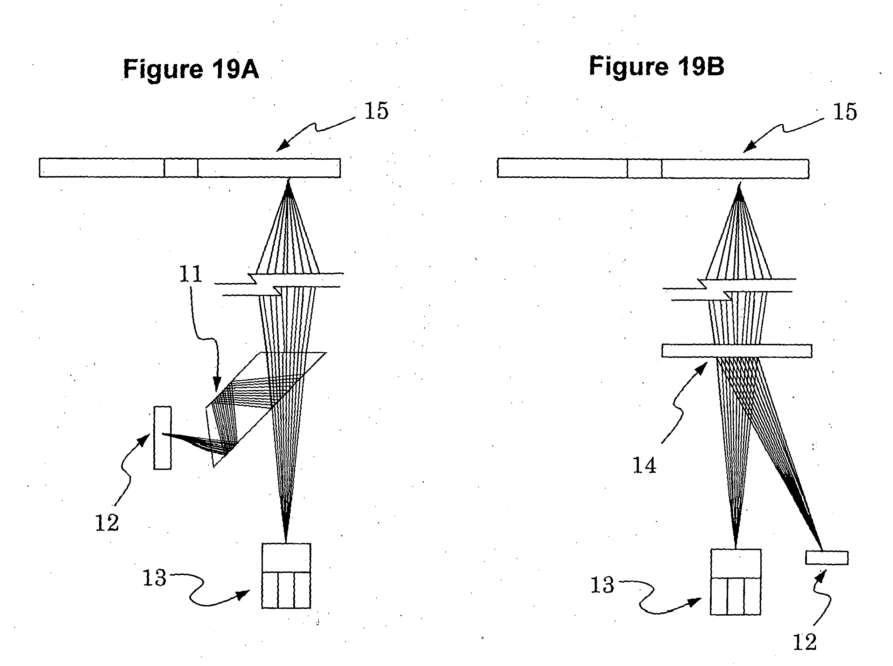

Figure 19A is a diagram depicting an optical pick-up having a reflective type diffraction grating according to the present invention. Figure 19B is a diagram depicting an optical pick-up having a refractive type diffraction grating according to the present invention. The same elements appearing in Figures 19A and 19B have been provided with the same reference numbers. The optical pickups are used for reproducing/recording signals from/to an optical recording medium 15. The optical pick-up devices shown in Figures 19A and 19B each include a photo-detector 12 and a light emitter 13.

When recording or reproduction is performed, the light emitting element 13 emits light having a wavelength in a range of 200nm to 790nm along a travel path to the optical recording medium 15. The wavelength of the light emitted from the light emitting element 13 can be varied in a range of 200nm to 790nm. The light is then reflected by the optical recording medium 15 and then traces a partial portion of the travel path in a reverse direction. According to the optical pickup shown in Figure 19A, a polarization beam splitter reflects the light which is then received by the reflective diffraction grating 11, and then the reflective diffraction grating 11 diffracts the light onto the photo-detector 12. According to the optical pickup shown in Figure 19B, the refractive diffraction grating 14 receives the reflected light and diffracts the light onto the photo-detector 12. The reflective diffraction grating 11 and the refractive diffraction grating 14 are each structured and designed according to the diffraction gratings described in detail earlier. The photo-detector 12, upon receiving the diffracted light, converts the received light into a digital signal. The structure of the photo-detector 12 is the same as described earlier with reference to Figure 11.

While the aforementioned features constitute the novel aspects of the optical pickup according to the present invention, it is readily apparent to one of ordinary skill in the art that various other well known elements and arrangements can be provided in the optical pickup. For example, additional optical elements can be disposed along the travel path of light between the optical recording medium and the diffraction grating (i.e., in the cut-off portions of Figure 19A and 19B).

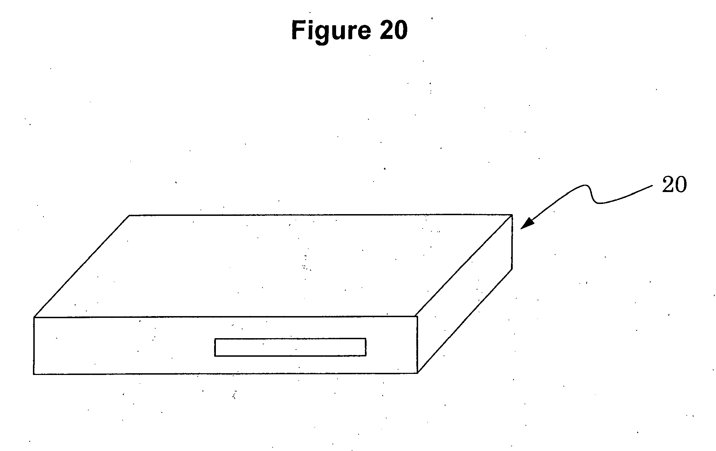

Lastly, Figure 20 is a diagram depicting an optical disc apparatus according to the present invention. It is noted that the optical disc apparatus includes the optical pickup according to the present invention as described earlier. Moreover, the optical disc apparatus can be any one of a set-top optical disc player/recorder, a portable optical disc player/recorder, a desktop computer, a portable computer, or any other device which is capable of receiving an optical disc for reproduction/recordation of data.

Although the preferred embodiments of the present invention have been described and disclosed for illustrative purposes, those skilled in the art will appreciate that various modifications, additions, and substitutions are possible, without departing from the scope and spirit of the invention as set forth in the accompanying claims.

**Claims**

1.   A diffraction grating for use in an optical pick-up device, said diffraction grating comprising:

at least two partitions each including a plurality of grooves forming a periodic predetermined shape;
wherein said plurality of grooves contained in at least one of said at least two partitions have a period to provide a predetermined angle of at least one of +m and - m orders of diffracted light $\theta_{dif}$ for a predetermined angle of incident light $\theta_{in}$ (m is an integer greater than 1, and $\theta_{in}$ and $\theta_{dif}$ are measured from a grating normal) as follows:

$$\text{period} = m \times p;$$

wherein:

$$p = \pm \lambda / (\sin \theta_{in} - \sin \theta_{dif});$$

$\pm$ corresponds to the sign of the at least one of +m and - m orders of diffracted light; and
$\lambda$ = wavelength of the incident light.

2.   A diffraction grating as claimed in claim 1, wherein said plurality of grooves contained in said at least one of said at least two partitions have a grating depth $\approx$ m x d, wherein d is a depth corresponding to a maximum diffraction efficiency for p.

3.   A diffraction grating as claimed in claim 2, wherein d is calculated based on RCWM (Rigorous Coupled Wave Method).

4.   A diffraction grating as claimed in claim 2, wherein the grating depth and the period of said plurality of grooves contained in different ones of said at least two partitions are different.

5.   A diffraction grating as claimed in claim 2, wherein the grating depth of said plurality of grooves contained in at least one of said at least two partitions is slightly varied from one of said plurality of grooves to a next one of said plurality of grooves.

6. A diffraction grating as claimed in claim 1, wherein said diffraction grating is one of a gray-level grating and a multi-level grating and the predetermined shape is one of a blazed saw-tooth shape and a stair-case shape, respectively.

7. A diffraction grating as claimed in claim 1, wherein $\lambda$ is in a range of 200 nm to 790 nm.

8. A diffraction grating as claimed in claim 1, wherein the period of said plurality of the grooves contained in at least one of said at least two partitions is slightly varied from one of said plurality of grooves to a next one of said plurality of grooves.

9. A diffraction grating as claimed in claim 1, wherein said plurality of grooves contained in at least one of said at least two partitions are curved.

10. A diffraction grating for use in an optical pick-up device, said diffraction grating comprising:

at least two partitions each including a plurality of grooves forming a periodic predetermined shape;
wherein said plurality of grooves contained in a first one of said at least two partitions are designed for use with one of +1st and -1st orders of diffracted light having a first predetermined angle of diffraction for a first predetermined angle of incident light; and
wherein said plurality of grooves contained in a second one of said at least two partitions are designed for use with one of +m and -m orders of diffracted light having a second predetermined angle of diffraction for a second predetermined angle of incident light, wherein m is an integer greater than 1.

11. A diffraction grating as claimed in claim 10, wherein said diffraction grating is one of a gray-level grating and a multi-level grating and the predetermined shape is one of a blazed saw-tooth shape and a stair-case shape, respectively.

12. A beam splitter for splitting a beam of light reflected from an optical recording medium, said beam splitter being disposed along a travel path of light between a light emitting element and the optical recording medium, said beam splitter comprising:

a polarization beam splitter surface operable to direct light emitted from the light emitting element towards the optical recording medium and to direct light reflected from the optical recording medium towards a diffraction grating; and
said diffraction grating being disposed to receive the light directed by said polarization beam splitter, said diffraction grating comprising at least two partitions each including a plurality of grooves forming a periodic predetermined shape;
wherein said plurality of grooves contained in at least one of said at least two partitions have a period to provide a predetermined angle of at least one of +m and -m orders of diffracted light $\theta_{dif}$ for a predetermined angle of incident light $\theta_{in}$ (m is an integer greater than 1, and $\theta_{in}$ and $\theta_{dif}$ are measured from a grating normal) as follows:

$$\text{period} = m \times p;$$

wherein:

$$p = \pm \lambda / (\sin \theta_{in} - \sin \theta_{dif});$$

$\pm$ corresponds to the sign of the at least one of +m and -m orders of diffracted light; and
$\lambda$ = wavelength of the incident light.

13. A beam splitter as claimed in claim 12, wherein said plurality of grooves contained in said at least one of said at least two partitions have a grating depth = m x d, wherein d is a depth corresponding to a maximum diffraction efficiency for p.

14. A beam splitter as claimed in claim 13, wherein d is calculated based on RCWM (Rigorous Coupled Wave Method).

15. A beam splitter as claimed in claim 12, wherein said diffraction grating is one of a gray-level grating and a multi-level grating and the predetermined shape is one of a blazed saw-tooth shape and a stair-case shape, respectively.

16. A beam splitter as claimed in claim 12, wherein $\lambda$ is in a range of 200 nm to 790 nm.

17. An optical pick-up comprising:

a light emitting element operable to emit light along a travel path to the optical recording medium;
a diffraction grating operable to receive light which has been reflected from the optical recording medium, said diffraction grating comprising at least two partitions each including a plurality of grooves forming a periodic predetermined shape;
wherein said plurality of grooves contained in at least one of said at least two partitions have a period to provide a predetermined angle of at least one of +m and -m orders of diffracted light $\theta_{dif}$ for a predetermined angle of incident light $\theta_{in}$ (m is an integer greater than 1, and $\theta_{in}$ and $\theta_{dif}$ are measured from a grating normal) as follows:

$$\text{period} = m \times p;$$

wherein:

$$p = \pm \lambda / (\sin \theta_{in} - \sin \theta_{dif});$$

$\pm$ corresponds to the sign of the at least one of +m and -m orders of diffracted light; and
$\lambda$ = wavelength of the incident light; and
a photo-detector operable to receive light diffracted from said diffraction grating and convert the received light into a digital signal.

18. An optical pick-up as claimed in claim 17, wherein said plurality of grooves contained in said at least one of said at least two partitions have a grating depth $\approx$ m x d, wherein d is a depth corresponding to a maximum diffraction efficiency for p.

19. An optical pick-up as claimed in claim 18, wherein d is calculated based on RCWM (Rigorous Coupled Wave Method).

20. An optical pick-up as claimed in claim 17, wherein said diffraction grating is one of a gray-level grating and a multi-level grating and the predetermined shape is one of a blazed saw-tooth shape and a stair-case shape, respectively.

21. An optical pick-up as claimed in claim 17, wherein said diffraction grating is a refractive type grating.

22. An optical pick-up as claimed in claim 17, wherein said diffraction grating is a reflective type grating and said optical pick-up further comprises a polarization beam splitter element disposed along the travel path of the light between said light emitting element and the optical recording medium, said polarization beam splitter element being operable to direct light emitted from said light emitting element towards the optical recording medium and to direct light reflected from the optical recording medium towards said diffraction grating.

23. An optical pick-up as claimed in claim 17, wherein $\lambda$ is in a range of 200 nm to 790 nm.

24. A method for designing a diffraction grating for use in an optical pick-up device, said method comprising:

providing at least two partitions on the diffraction grating;
providing a plurality of grooves forming a periodic predetermined shape on each of the at least two partitions; and

setting a period of the plurality of grooves contained in at least one of the at least two partitions to provide a predetermined angle of at least one of +m and -m orders of diffracted light $\theta_{dif}$ for a predetermined angle of incident light $\theta_{in}$ (m is an integer greater than 1, and $\theta_{in}$ and $\theta_{dif}$ are measured from a grating normal) as follows:

$$period = m \times p;$$

wherein:

$$p = \pm \lambda / (\sin \theta_{in} - \sin \theta_{dif});$$

$\pm$ corresponds to the sign of the at least one of +m and -m orders of diffracted light; and
$\lambda$ = wavelength of the incident light.

25. A method as claimed in claim 24, further comprising setting a grating depth of the plurality of grooves contained in the at least one of the at least two partitions to be = m x d, wherein d is a depth corresponding to a maximum diffraction efficiency for p.

26. A method as claimed in claim 25, further comprising calculating the depth d using RCWM (Rigorous Coupled Wave Method).

27. A method as claimed in claim 25, further comprising digitizing the grating depth of the plurality of grooves.

28. A method as claimed in claim 24, wherein the diffraction grating is one of a gray-level grating and a multi-level grating and the predetermined shape is one of a blazed saw-tooth shape and a stair-case shape, respectively.

29. A method for designing a diffraction grating for use in an optical pick-up device, the diffraction grating including a plurality of partitions each having a plurality of grooves which form a periodic predetermined shape and which have a wavelength of incident light $\lambda$, a predetermined angle of incident light $\theta_{in}$, a predetermined angle of diffracted light $\theta_{dif}$, a predetermined period = p0, and a predetermined depth = d0, said method comprising:

selecting one of the plurality of partitions;
setting an m order of diffracted light to be one of +1 (positive order) and -1 (negative order);
calculating a period p of the plurality of grooves using the following equation:

$$p = m\lambda / (\sin \theta_{dif} - \sin \theta_{in}) ;$$

determining if p is greater than p0 and:

if p is not greater than p0, then setting m to be one of m+1 (positive order) and m-1 (negative order) and repeating said calculating and determining; and
if p is greater than p0, then obtaining a grating depth d yielding a maximum diffraction efficiency;

deciding if the obtained grating depth is greater than d0 and:

if the obtained grating depth is not greater than d0, then setting m to be one of m+1 (positive order) and m-1 (negative order) and repeating said calculating, determining, and deciding; and
if the obtained grating depth is greater than d0, then the obtained grating depth d, period p, and m order are selected as design parameters for the selected partition;

repeating said selecting, setting, calculating, determining, and deciding for the remaining ones of the plurality of partitions.

**30.** A method as claimed in claim 29, wherein the diffraction grating is one of a gray-level grating and a multi-level grating and the predetermined shape is one of a blazed saw-tooth shape and a stair-case shape, respectively.

**31.** A method as claimed in claim 30, further comprising calculating the depth d using RCWM (Rigorous Coupled Wave Method).

**32.** A method as claimed in claim 29, wherein d0 and p0 are minimum manufacturing thresholds.

**33.** A method as claimed in claim 29, wherein the plurality of partitions comprise at least one partition having one of +1st and -1st orders selected as a design parameter and at least one other partition having an order selected as a design parameter which is higher than the one of the +1st and -1st orders.

**34.** A method for designing a diffraction grating for use in an optical pick-up device, said method comprising:

providing at least two partitions on the diffraction grating;
forming a plurality of grooves having a periodic predetermined shape on each of the at least two partitions;
selecting a period of the plurality of grooves contained in a first one of the least two partitions to use one of +1st and -1st orders of diffracted light having a first predetermined angle of diffraction for a first predetermined angle of incident light; and
selecting a period of the plurality of grooves contained in a second one of the at least two partitions to use one of +m and -m orders of diffracted light having a second predetermined angle of diffraction for a second predetermined angle of incident light, wherein m is an integer greater than 1.

**35.** A method as claimed in claim 34, wherein the diffraction grating is one of a gray-level grating and a multi-level grating and the predetermined shape is one of a blazed saw-tooth shape and a stair-case shape, respectively.

**36.** An optical pick-up comprising:

a light emitting element operable to emit light to an optical medium;
a diffraction grating including a first portion and a second portion operable to diffract light reflected from the optical medium into first diffracted light and second diffracted light, respectively;
a first photo-detecting section operable to detect the first diffracted light which is diffracted from said first portion of said diffraction grating; and
a second photo-detecting section operable to detect the second diffracted light which is diffracted from said second portion of said diffraction grating;
wherein an order of the first diffracted light is greater than an order of the second diffracted light.

**37.** An optical disc apparatus comprising:

a light emitting element operable to emit light to an optical disc;
a diffraction grating including a first portion and a second portion operable to diffract light reflected from the optical disc into first diffracted light and second diffracted light, respectively;
a first photo-detecting section operable to detect the first diffracted light which is diffracted from said first portion of said diffraction grating; and
a second photo-detecting section operable to detect the second diffracted light which is diffracted from said second portion of said diffraction grating;
wherein an order of the first diffracted light is greater than an order of the second diffracted light, and the first diffracted light and the second diffracted light are used for a focusing signal and a tracking signal, respectively.

# Figure 1

EP 1 640 752 A1

# Figure 2

EP 1 640 752 A1

Figure 3

18

# Figure 4

# Figure 5

EP 1 640 752 A1

# Figure 6

EP 1 640 752 A1

Figure 7

EP 1 640 752 A1

Figure 8

Figure 9B

Diffraction Efficiency

Max Ef

Grating depth

d

Figure 9A

Incident light

θ inc

θ diff

Diffracted light

d

p

Figure 10B

Figure 10A

# Figure 11

EP 1 640 752 A1

Partition 2

Partition 1

Partition 3

Partition 4    Partition 5

Partition 6

1st order grating configuration

Original beam order

| 1 | 1 | 1 |
| 1 | 1 | 1 |

Higher order grating configuration

New beam order

| 1 | 1 | 2 |
| 3 | 1 | 3 |

Photo-detector 12

Figure 12

EP 1 640 752 A1

# Figure 13

(S1) Wavelength $\lambda$, incident angle $\theta_{in}$, diffraction angle $\theta_{dif}$, max number of partition $N$max are predetermined.

(S2) Fabrication limits for period $p0$ and depth $d0$ are predetermined.

(S3) Set partition N = 1

(S4) Set order $m$ = 1 or –1

(S5) Calculate period $p$.

(S7) Set $m = m$ +1 or m–1

NO (S6) $p > p0$?

YES

(S8) Optimize depth $d$.

(S10) Set $m = m$ +1 or m–1

(S9) $d > d0$? NO

YES

(S11) $m$-th order is used for partition $N$

(S12) Go next partition setting $N=N+1$

(S13) $N = N$max + 1 ? NO

YES

(S14) END

EP 1 640 752 A1

# Figure 14

Conventional binary grating

Partition 2    Partition 6    Partition 3

1st / p /d    1st / p /d    1st / p /d

The present invention

1st / p /d    3rd / 3p /3d    2nd / 2p /2d

EP 1 640 752 A1

Figure 15

Figure 16

EP 1 640 752 A1

# Figure 17

Figure 18

EP 1 640 752 A1

# Figure 19A

# Figure 19B

EP 1 640 752 A1

Figure 20

EP 1 640 752 A1

**European Patent Office**

**EUROPEAN SEARCH REPORT**

Application Number

EP 05 02 0880

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/047269 A1 (IKENAKA KIYONO ET AL) 11 March 2004 (2004-03-11) | 1-21, 23-37 | G02B5/18 G11B7/135 |
| Y | * figures 1,5,8 * * paragraph [0388] - paragraph [0406] * * paragraph [0534] - paragraph [0548] * | 22 | |
| X | US 2004/170106 A1 (KOMMA YOSHIAKI) 2 September 2004 (2004-09-02) * figures 1,2,3A,3B,4A-4C * * paragraph [0071] - paragraph [0081] * * paragraph [0086] - paragraph [0092] * | 1-3,6,7, 10-21, 23-35 | |
| X | WO 03/075267 A (MATSUSHITA ELECTRIC INDUSTRIAL CO., LTD; KOMMA, YOSHIAKI; WADA, HIDENO) 12 September 2003 (2003-09-12) * figures 1-4 * | 1-3,6,7, 10-21, 23-35 | |
| P,X | -& US 2005/152258 A1 (KOMMA YOSHIAKI ET AL) 14 July 2005 (2005-07-14) * abstract * * paragraph [0004] - paragraph [0008] * * paragraph [0012] - paragraph [0026] * * figures 1-4 * | 1-3,6,7, 10-21, 23-35 | TECHNICAL FIELDS SEARCHED (IPC) G02B G11B |
| Y | EP 0 326 203 A (N.V. PHILIPS' GLOEILAMPENFABRIEKEN) 2 August 1989 (1989-08-02) * figure 1 * * column 5, line 36 - line 55 * * column 8, line 23 - line 44 * | 22 | |
| A | EP 0 829 863 A (PIONEER ELECTRONIC CORPORATION) 18 March 1998 (1998-03-18) * figures 1-4,8,10-12 * * page 4, line 10 - page 5, line 52 * | 1-37 | |

-/--

The present search report has been drawn up for all claims

| Place of search | Date of completion of the search | Examiner |
|---|---|---|
| Munich | 19 December 2005 | Windecker, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 05 02 0880

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2003/053211 A1 (TAKASUKA SHOICHI ET AL) 20 March 2003 (2003-03-20)<br>* figures 2-4,9,10 *<br>* abstract *<br>* paragraph [0053] - paragraph [0063] *<br>* paragraph [0069] - paragraph [0072] *<br>----- | 1-37 | |
| | | | **TECHNICAL FIELDS SEARCHED (IPC)** |

The present search report has been drawn up for all claims

| Place of search | Date of completion of the search | Examiner |
|---|---|---|
| Munich | 19 December 2005 | Windecker, R |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.                    EP 05 02 0880

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2005

| Patent document cited in search report | | Publication date | Patent family member(s) | | Publication date |
|---|---|---|---|---|---|
| US 2004047269 | A1 | 11-03-2004 | NONE | | |
| US 2004170106 | A1 | 02-09-2004 | CN | 1558406 A | 29-12-2004 |
| WO 03075267 | A | 12-09-2003 | AU | 2003207160 A1 | 16-09-2003 |
| | | | CN | 1639784 A | 13-07-2005 |
| | | | US | 2005152258 A1 | 14-07-2005 |
| US 2005152258 | A1 | 14-07-2005 | AU | 2003207160 A1 | 16-09-2003 |
| | | | CN | 1639784 A | 13-07-2005 |
| | | | WO | 03075267 A1 | 12-09-2003 |
| EP 0326203 | A | 02-08-1989 | DE | 68906274 D1 | 09-06-1993 |
| | | | DE | 68906274 T2 | 25-11-1993 |
| | | | ES | 2040978 T3 | 01-11-1993 |
| | | | HK | 88094 A | 02-09-1994 |
| | | | JP | 1224933 A | 07-09-1989 |
| | | | JP | 2740226 B2 | 15-04-1998 |
| | | | KR | 142089 B1 | 01-06-1998 |
| | | | NL | 8800133 A | 16-08-1989 |
| | | | US | 4918679 A | 17-04-1990 |
| EP 0829863 | A | 18-03-1998 | JP | 3524287 B2 | 10-05-2004 |
| | | | JP | 10092001 A | 10-04-1998 |
| | | | US | 5805557 A | 08-09-1998 |
| US 2003053211 | A1 | 20-03-2003 | US | 2003016448 A1 | 23-01-2003 |

EPO FORM P0459

For more details about this annex : see Official Journal of the European Patent Office, No. 12/82